# EUROPÄISCHE PATENTANMELDUNG

(11) **EP 4 482 194 A1**
(43) Veröffentlichungstag der Anmeldung: **25.12.2024**
(21) Anmeldenummer: 23180571.4
(22) Anmeldetag: 21.06.2023
(51) Int. Cl.: H04W 24/02, H04W 16/18

(54) **VERFAHREN UND SYSTEM ZUM KONFIGURIEREN EINES DRAHTLOSEN NETZWERKS**

(71) Anmelder: GIRA GIERSIEPEN GmbH & Co. KG, 42477 Radevormwald (DE)
(72) Erfinder: Klee, Jan, 50825 Köln (DE)
(74) Vertreter: Angerhausen, Christoph

(57) **Zusammenfassung**

Die Erfindung betrifft ein Verfahren zum Konfigurieren eines drahtlosen Netzwerks (101), umfassend die folgenden Schritte: Aussenden von Funkdaten durch Knoten (10) des drahtlosen Netzwerks (101); Empfangen der Funkdaten mit einem Funkadapter (2); Übertragen der Funkdaten von dem Funkadapter (2) an ein mit dem Funkadapter (2) zum Datenaustausch verbundenes Mobilgerät (1); Erstellen von mindestens einem, mehreren oder allen Knoten (10) zugeordneten Zustandsdaten mit dem Mobilgerät (1) basierend auf den Funkdaten, wobei die Zustandsdaten den Zustand einer Funkverbindung eines entsprechenden Knotens (10) repräsentieren, bevorzugt eine Empfangsfeldstärke des Funkadapters (2) und/oder eine Sendefeldstärke des Knotens (10); Erstellen einer Konfiguration des drahtlosen Netzwerks (101) basierend auf den Zustandstaten, wobei die Konfiguration bevorzugt von dem Mobilgerät (1) erstellt wird. Die Erfindung betrifft zudem ein entsprechendes System (100).

## Beschreibung

Die Erfindung betrifft ein Verfahren zum Konfigurieren eines drahtlosen Netzwerks, und ein entsprechendes System.

Netzwerke, insbesondere drahtlose Netzwerke, dienen üblicherweise dem Datenaustausch und der Kommunikation zwischen verschiedenen Geräten, beispielsweise Endgeräten oder Peripheriegeräte, und weisen üblicherweise eine oder mehrere Netzwerkkomponenten auf, z.B. Knoten. Beispielhafte Netzwerke können wide are networks (WAN), metropolitan are networks (MAN) und/oder local area networks (LAN) sein oder umfassen.

Derartige Netzwerke müssen konfiguriert sein oder werden, bzw. geeignet eingerichtet sein oder werden, damit ein Datenaustausch mit oder über das Netzwerk möglich ist. Zudem kann es notwendig sein, ein bereits konfiguriertes Netzwerk anders oder neu zu konfigurieren. In beiden Fällen kann eine Analyse des Netzwerks, insbesondere dessen Qualität und/oder Güte, notwendig sein. Beispielsweise sollte ein Netzwerk wünschenswerterweise derart konfiguriert sein oder werden, und/oder eine bestehende Konfiguration nochmals oder neu konfiguriert sein oder werden bzw. abgeändert sein oder werden, dass das Netzwerk nach dem Konfigurieren eine hohe Qualität und/oder Güte, oder zumindest eine verbesserte Qualität und/oder Güte, hat. Zudem kann das Netzwerk nach dem Konfigurieren eine bessere Zuverlässigkeit haben.

Bekannt sind Analyse-Werkzeuge, um Funkverbindungen zu überprüfen. Bekannte Analyse-Werkzeuge können sogenannte Spectrum-Analyzer sein oder umfassen, die die eine Empfangsfeldstärke eines empfangenen Funktelegramms und/oder empfangener Funkdaten einem Benutzer anzeigen können. Ein Beispiel für einen derartigen Spectrum-Analyzer ist der von der Firma ELV Electronic AG vertriebene "ELV Funk-Analyser EQ₃-RFA". Derartige Analyse-Werkzeuge können auch mit einem anderen Spectrum-Analyzern oder einem anderen Funk-Empfänger kommunizieren, um eine Aussage zur Funk-Reichweite treffen zu können. Damit kann der Benutzer, z.B. ein Elektriker anschließend grob einschätzen, ob und wie die Funk-Verbindung z.B. zwischen einem Sensor und einem Aktor eingerichtet sein könnte. Allerdings liegt die tatsächliche Konfiguration des Netzwerks in den Händen des Benutzers, d.h. der Benutzer muss aus den von dem Spectrum-Analyzer bereitgestellten Informationen geeignete Parameter und Einstellungen der Knoten, bzw. die Konfiguration des Netzwerks, ableiten und das Netzwerk entsprechend einrichten. Die bekannten Spectrum-Analyzern können gesammelte Informationen zudem maschinell nicht speichern und/oder weiterverarbeiten.

Ein weiteres Analyse-Werkzeug ist aus der US 2008/015172 A2 bekannt. Dabei werden Knoten des Netzwerks in einem Testbetrieb betrieben, und senden vorgegebene Testdaten bzw. Funkdaten zu vorgegebenen Zeitpunkten bzw. nach einem vorgegebenen Testschema aus. Das Analyse-Werkzeug kann die Testdaten empfangen. Diese können anschließend an einen stationären Überwachungscomputer übermittelt werden, der anschließend das Netzwerk anhand der empfangenen Testdaten analysieren kann.

Eine Konfiguration des Netzwerks ist damit vergleichsweise mühsam und langwierig. Zudem ist ein derartiges Vorgehen fehleranfällig. Es ist weiterhin vergleichsweise schwierig, das Netzwerk derart zu konfigurieren oder zu verändern, dass sich eine gute Netzwerkqualität, geschweige denn eine optimale Netzwerkqualität, ergibt.

Diese Nachteile werden durch ein erfindungsgemäßes Verfahren nach Anspruch 1 und ein entsprechendes System nach Anspruch 11 überwunden. Die Unteransprüche betreffen jeweils vorteilhafte Ausführungsformen.

Ein erster Aspekt der Erfindung betrifft ein Verfahren zum Konfigurieren eines drahtlosen Netzwerks, umfassend die folgenden Schritte:
- Aussenden von Funkdaten durch Knoten des drahtlosen Netzwerks;
- Empfangen der Funkdaten mit einem Funkadapter;
- Übertragen der Funkdaten von dem Funkadapter an ein mit dem Funkadapter zum Datenaustausch verbundenes Mobilgerät;
- Erstellen von mindestens einem, mehreren oder allen Knoten zugeordneten Zustandsdaten mit dem Mobilgerät basierend auf den Funkdaten, wobei die Zustandsdaten den Zustand einer Funkverbindung eines entsprechenden Knotens repräsentieren;
- Erstellen einer Konfiguration des drahtlosen Netzwerks basierend auf den Zustandstaten.

Es kann vorgesehen sein, dass bei dem Erstellen der Konfiguration die Konfiguration von dem Mobilgerät erstellt wird. Damit kann einfach und unkompliziert das drahtlose Netzwerk konfiguriert sein oder werden, da ein separates Gerät zum Erstellen der Konfiguration und ein Übertragen der Zustandsdaten an das separate Gerät entfallen kann. Die vorliegende Erfindung kann damit ermöglichen, dass eine Konfiguration des Netzwerks direkt "vor Ort" erstellt werden kann.

Das Mobilgeräts kann ein Smartphone, ein Tablet, ein Laptop, ein PDA oder dergleichen sein oder aufweisen. Das Mobilgerät kann ein Handgerät (handheld device) sein oder aufweisen.

Die Zustandsdaten können den z.B. Empfangsfeldstärke des Funkadapters und/oder eine Sendefeldstärke eines Knotens repräsentieren oder abbilden. Das Bestimmen der Zustandsdaten kann ein Bestimmen einer Qualität und/oder Güte, beispielsweise einer Übertragungsqualität, einer Übertragungsgeschwindigkeit, Übertragungsreichweite, Paketverluste, Downtime oder Ausfälle, oder dergleichen, einer Funkverbindung und/oder des drahtlosen Netzwerks umfassen. Es kann auch vorgesehen sein, dass alternativ oder zusätzlich Defekte, z.B. defekte Knoten, erkannt, ermittelt und/oder berücksichtigt sein oder werden können.

Ein Knoten kann ein Access Point, ein Router, ein Switch, ein Gateway, ein Sensor, ein Aktor, ein Medienkoppler und/oder ein Repeater sein und/oder aufweisen. Ein Knoten kann als ein Access Point, ein Router, ein Switch, ein Gateway, ein Sensor, ein Aktor, ein Medienkoppler und/oder ein Repeater konfiguriert sein oder werden. Bei dem und/oder durch das Konfigurieren kann ein Knoten als ein Access Point, ein Router, ein Switch, ein Gateway, ein Sensor, ein Aktor, ein Medienkoppler und/oder ein Repeater eingerichtet sein oder werden.

Das drahtlose Netzwerk kann für ein Smart Home und/oder Heimautomatisierung (home automation) vorgesehen und/oder verwendet sein oder werden. Das drahtlose Netzwerk ist aber nicht zwingend darauf beschränkt.

Die Übertragung der Funkdaten von dem Funkadapter an das Mobilgerät kann drahtlos erfolgen, z.B. über Bluetooth und/oder ein anderes geeignetes drahtloses Protokoll. Alternativ oder zusätzlich kann Die Übertragung der Funkdaten von dem Funkadapter an das Mobilgerät kabelgebunden erfolgen, beispielsweise über USB-C. In einigen Ausführungsformen kann der Funkadapter in das Mobilgerät integriert sein.

Es kann vorgesehen sein, dass ein Knoten mit mindestens einem anderen Knoten zum Datenaustausch verbunden sein kann, und/oder Daten austauschen kann. Mindestens einer der Knoten kann mit einem oder mehreren externen Geräten verbunden sein, und/oder Daten austauschen.

Beim Erstellen der Konfiguration können Konfigurationsdaten mindestens eines, mehrerer oder aller Knoten erstellt werden. Es kann vorgesehen sein, dass die Konfigurationsdaten an die entsprechenden Knoten übertragen werden können, so dass das Netzwerk konfiguriert werden kann. Alternativ oder zusätzlich können die Konfigurationsdaten an ein Inbetriebnahmewerkzeug übertragen werden. Das Mobilgerät kann beispielsweise die Konfigurationsdaten zum Konfigurieren des Netzwerks an einen, mehrere oder alle Knoten übermitteln. Alternativ oder zusätzlich kann das Mobilgerät beispielsweise die Konfiguration und/oder Konfigurationsdaten zum Konfigurieren des Netzwerks an das Inbetriebnahmewerkzeug übermittelt werden. Das Inbetriebnahmewerkzeug kann anschließend die Konfigurationsdaten und/oder die Konfiguration an einen, mehrere oder alle Knoten übermitteln, um das drahtlose Netzwerk zu konfigurieren. Durch das Inbetriebnahmewerkzeug kann damit das Erstellen der Konfiguration von dem Konfigurieren des Netzwerks getrennt sein oder werden, so dass das Konfigurieren des Netzwerks nachträglich, z.B. zeitlich versetzt und/oder von einer anderen Person, ausgeführt sein oder werden kann.

Es kann vorgesehen sein, dass die Konfiguration automatisch und/oder selbstständig erstellt sein oder werden kann, beispielsweise durch das Mobilgerät. In einigen Ausführungsformen kann die Konfiguration automatisch und/oder selbstständig erstellt sein oder werden, wenn Zustandsdaten erstellt worden sind und/oder vorliegen.

Es kann vorgesehen sein, dass Zustandsdaten automatisch und/oder selbstständig erstellt sein oder werden können. In einigen Ausführungsformen können Zustandsdaten automatisch und/oder selbstständig erstellt sein oder werden, wenn Funkdaten erfasst worden sind und/oder vorliegen, und/oder an das Mobilgerät übermittelt sind oder werden.

Alternativ oder zusätzlich kann vorgesehen sein, dass das Erstellen der Konfiguration und/oder der Zustandsdaten durch einen oder den Benutzer initiiert, gestartet und/oder ausgelöst wird. Beispielsweise kann das Mobilgerät 1 eine App ausführen, über die der Benutzer Steuerbefehle übermitteln kann. Es kann vorgesehen sein, dass das Erstellen der Konfiguration und/oder der Zustandsdaten durch den Benutzer über die App initiiert, gestartet und/oder ausgelöst wird.

Beim Aussenden der Funkdaten kann das drahtlose Netzwerk eine erste Konfiguration aufweisen. Beim Erstellen der Konfiguration kann eine von der ersten Konfiguration verschiedene zweite Konfiguration erstellt werden. Es kann vorgesehen sein, dass die zweite Konfiguration derart erstellt sein oder werden kann, dass diese verglichen mit der ersten Konfiguration eine höhere Qualität und/oder Güte des drahtlosen Netzwerks ermöglichen kann. Mit höherer Qualität und/oder Güte kann eine bessere Übertragungsqualität und/oder Übertragungsgeschwindigkeit, geringere Paketverluste, und/oder eine geringere Downtime und/oder Ausfälle des Netzwerks gemeint sein.

Das Verfahren kann mindestens einmal wiederholt werden. Beim Wiederholen des Verfahrens kann beim Aussenden der Funkdaten das drahtlose Netzwerk die zweite Konfiguration aufweisen, und beim Erstellen der Konfiguration eine von der zweiten Konfiguration verschiedene dritte Konfiguration erstellt werden. Es kann vorgesehen sein, dass die dritte Konfiguration von der ersten und der zweiten Konfiguration verschieden sein kann. In einigen Ausführungsformen kann das Verfahren iterativdurchgeführt sein oder werden. In einigen Ausführungsformen kann durch oder bei Wiederholen des Verfahrens, z.B. iterativen Wiederholen, die Qualität und/oder Güte des drahtlosen Netzwerks optimiert sein oder werden.

Beim Erstellen der Konfiguration und/oder der Konfigurationsdaten kann mindestens einer der Knoten als Repeater konfiguriert werden. Alternativ oder zusätzlich kann beim Erstellen der Konfiguration und/oder der Konfigurationsdaten eine Kommunikationsverbindung mindestens eines Knotens verändert werden.

Es kann vorgesehen sein, dass die Funkdaten und/oder die Zustandsdaten in einem Speicher des Mobilgeräts hinterlegt werden können. In einigen Ausführungsformen kann vorgesehen sein, dass das Mobilgerät mit einem externen Gerät zum Datenaustausch verbunden sein oder werden kann. Die in dem Speicher hinterlegten Funkdaten und/oder Zustandsdaten können von dem Mobilgerät an das externe Gerät übertragen sein oder werden. Wenn die Konfiguration von dem Mobilgerät 1 erstellt ist oder wird, so kann vorgesehen sein, dass die Konfiguration an das externe Gerät übertragen sein oder werden kann. In einigen Ausführungsformen kann das externe Gerät basierend auf den übermittelten Funkdaten und oder Zustandsdaten, und/oder Konfigurationen, z.B. eine Analyse des drahtlosen Netzwerks und/oder eines, mehrere oder aller Knoten durchführen. Alternativ oder zusätzlich können die übermittelten Funkdaten und/oder Zustandsdaten, und/oder Konfigurationen, in einer Datenbank und/oder einem Datenspeicher des externen Geräts hinterlegt sein und oder werden, beispielsweise archiviert.

In einigen Ausführungsformen kann vorgesehen sein, dass die Konfiguration basierend auf den übertragen Funkdaten und/oder Zustandsdaten von dem externen Gerät erstellt sein oder werden kann. In einigen Ausführungsformen kann die von dem externen Gerät erstellte Konfiguration an das Mobilgerät 1 übermittelt sein oder werden. Alternativ oder zusätzlich kann vorgesehen sein, dass die von dem externen Gerät erstellte Konfiguration an das Inbetriebnahmewerkzeug übermittelt sein oder werden kann.

Die Zustandsdaten mindestens eines der Knoten können auf dem Mobilgerät angezeigt werden. Alternativ oder zusätzlich kann eine basierend auf den Zustandsdaten erstellte Analyse auf dem Mobilgerät angezeigt werden. Es kann vorgesehen sein, dass die Analyse von dem Mobilgerät erstellt werden kann. Es kann vorgesehen sein, dass Funkdaten, Zustandsdaten und/oder darauf basierende Analysen einem Benutzer angezeigt sein oder werden können. In einigen Ausführungsformen kann das Mobilgerät ein Display aufweisen.

Bei oder nach dem Übertragen der Funkdaten an das Mobilgerät kann eine Position des Mobilgeräts mit den Zustandsdaten verknüpft werden. Alternativ oder zusätzlich kann nach dem Erstellen der Zustandsdaten eine Position des Mobilgeräts mit den Zustandsdaten verknüpft werden.

Zustandsdaten eines, mehrerer oder aller Knoten können an mindestens zwei verschiedenen Positionen des Mobilgeräts erstellt werden. Es kann vorgesehen sein, dass basierend auf den Zustandsdaten eines, mehrerer oder aller Knoten und/oder den jeweiligen Positionen des Mobilgeräts Funklöcher ermittelt werden können. Bevorzugt können die Funklöcher von dem Mobilgerät ermittelt sein oder werden.

Es kann vorgesehen sein, dass das Verfahren in einem Regelbetrieb des drahtlosen Netzwerks durchgeführt werden kann. Der Regelbetrieb kann ein normaler Betrieb des drahtlosen Netzwerks sein. Es kann vorgesehen sein, dass bei der Durchführung des Verfahrens, und/oder eines, mehrere und/oder alle Schritte des Verfahrens, das drahtlose Netzwerk in seiner Funktion nicht beeinträchtigt, gestört und/oder beeinflusst ist. Beispielsweise kann vorgesehen sein, dass die von und/oder in dem drahtlosen Netzwerk übertragenen und/oder gesendeten Funkdaten solchen Funkdaten entsprechen, die in einem üblichen, normalen und/oder Regelbetrieb übertragen und/oder gesendet sind oder werden. In einigen anderen Ausführungsformen kann vorgesehen sein, dass bei Durchführung des Verfahrens, und/oder eines, mehrere und/oder alle Schritte des Verfahrens, das drahtlose Netzwerk in einem Testbetrieb betrieben sein oder werden kann, der auf die Durchführung des Verfahrens abgestimmt sein kann. Beispielsweise kann vorgesehen sein, dass das drahtlose Netzwerk bei oder zu Durchführung des Verfahrens, und/oder zumindest Teile des Verfahrens, Funkdaten überträgt und/oder verwendet werden, die von in dem Normalbetrieb verwendeten Funkdaten abweichen können.

Basierend auf den Zustandsdaten und/oder der Konfiguration kann mindestens ein Ort bestimmt werden und ein Knoten an dem entsprechend bestimmten Ort aufgestellt und dem drahtlosen Netzwerk hinzugefügt werden. Der mindestens eine Ort kann in mindestens einer Ausführungsform von dem Mobilgerät bestimmt sein oder werden. Es kann vorgesehen sein, dass der an dem Ort aufgestellte und dem drahtlosen Netzwerk hinzugefügte Knoten ein Repeater sein oder aufweisen kann. Es kann vorgesehen sein, dass nach dem Hinzufügen bei einer Wiederholung des Verfahrens der Ort des hinzugefügten Knotens verändert werden kann. Die Konfiguration und/oder die Zustandsdaten können vor der Veränderung des Orts und nach der Veränderung des Orts verglichen werden. Damit kann eine Güte und/oder Qualität verbessert sein oder werden.

Ein weiterer Aspekt betrifft ein System zum Konfigurieren eines drahtlosen Netzwerks, umfassend ein drahtloses Netzwerk mit mindestens einem Knoten, einen Funkadapter und ein mit dem Funkadapter zum Datenaustausch verbundenes Mobilgerät, wobei das System dazu eingerichtet ist, ein oder das vorstehend beschriebene Verfahren durchzuführen.

Mindestens einer, mehrere oder alle Knoten des drahtlosen Netzwerks können dazu eingerichtet sein, Funkdaten auszusenden. Der Funkadapter kann dazu eingerichtet sein, Funkdaten von den Knoten zu empfangen und an das Mobilgerät zu übermitteln. Das Mobilgerät kann dazu eingerichtet sein, basierend auf den übermittelten Funkdaten Zustandsdaten zu erstellen. Das Mobilgerät kann dazu eingerichtet sein, eine Konfiguration des drahtlosen Netzwerks zu erstellen, bevorzugt basierend auf und/oder unter Verwendung der Zustandsdaten.

Das Mobilgerät kann einen Speicher zum Hinterlegen von von dem Funkadapter an das Mobilgerät übermittelten Funkdaten und/oder zum Hinterlegen von von dem Mobilgerät erstellten Zustandsdaten aufweisen.

Der Funkadapter kann mit dem Mobilgerät drahtlos verbunden sein. In einigen Ausführungsformen kann der Funkadapter mit dem Mobilgerät über Bluetooth verbunden sein. Es können aber auch andere Übertragungsprotokolle verwendet sein oder werden, beispielsweise aber nicht beschränkt auf Wi-Fi, ZigBee, Z-Wave, ANT+ oder andere Low-rate wireless personal area networks. Alternativ oder zusätzlich kann Die Übertragung der Funkdaten von dem Funkadapter an das Mobilgerät kabelgebunden erfolgen, beispielsweise über USB-A und/oder andere Datenleitungen. In einigen Ausführungsformen kann der Funkadapter in das Mobilgerät integriert sein. Alternativ oder zusätzlich kann vorgesehen sein, dass das Mobilgerät den Funkadapter aufweisen kann.

Mindestens einer der Knoten kann vor einer Durchführung des Verfahrens nicht als Repeater konfiguriert sein, und nach der Durchführung des Verfahrens als Repeater konfiguriert sein.

Die Konfiguration des drahtlosen Netzwerks kann Konfigurationsdaten mindestens eines, mehrerer oder aller Knoten umfassen. Das Mobilgerät kann dazu eingerichtet sein, eine Konfiguration des Netzwerks zu erstellen. Das Mobilgerät kann dazu eingerichtet sein, die Konfiguration und/oder die Konfigurationsdaten an ein Inbetriebnahmewerkzeug zu übermitteln. Alternativ oder zusätzlich kann das Mobilgerät dazu eingerichtet sein, die Konfiguration und/oder die Konfigurationsdaten an einen zu konfigurierenden Knoten zu übertragen. Die Konfigurationsdaten der Konfiguration können an einen oder mehrere Knoten übertragbar sein, so dass die jeweiligen Knoten durch die Konfigurationsdaten konfiguriert sein können.

Das Mobilgerät kann eine Benutzerschnittstelle aufweisen und dazu eingerichtet sein, Befehle von einem Benutzer zu empfangen und zu verarbeiten.

Das Mobilgerät kann ein Display aufweisen und dazu eingerichtet sein, Zustandsdaten und/oder eine basierend auf den Zustandsdaten erstellte Analyse darzustellen. Die Analyse kann eine Funklochanalyse umfassen.

Die Erfindung wird beispielhaft anhand der Figuren weiter erläutert. Es zeigen:
- Fig. 1:: eine schematische Darstellung eines Ausführungsbeispiels eines Mobilgeräts und eines Funkadapters;
- Fig. 2:: eine schematische Darstellung eines Ausführungsbeispiel eines erfindungsgemäßen Systems und drahtlosen Netzwerks in einer Konfiguration
- Fig. 3:: eine schematische Darstellung des erfindungsgemäßen Systems und des drahtlosen Netzwerks der Fig. 2 in einer anderen Konfiguration;
- Fig. 4:: eine schematische Darstellung eines erfindungsgemäßen Systems;
- Fig: 5:: eine weitere schematische Darstellung des erfindungsgemäßen Systems der Fig. 4;
- Fig. 6:: eine schematische Darstellung eines erfindungsgemäßen Systems mit Bereichen verschiedener Qualität; und
- Fig. 7:: eine schematische Darstellung des erfindungsgemäßen Systems der Fig. 6 mit veränderten Bereichen verschiedener Qualität.

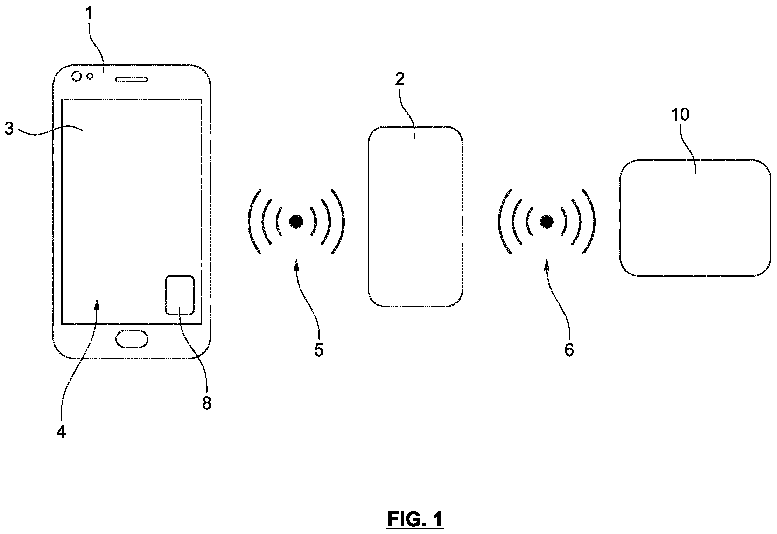

Figur 1 zeigt eine Mobilgerät 1 und einen Funkadapter 2. Das Mobilgerät 1 und der Funkadapter 2 sind zum Datenaustausch miteinander verbunden. Beispielsweise können Mobilgerät 1 und Funkadapter 2 Daten über eine drahtlose Verbindung, eine Mobilgerät Verbindung 5, miteinander austauschen. Alternativ oder zusätzlich kann vorgesehen sein, dass Mobilgerät 1 und Funkadapter 2 über ein Kabel miteinander verbunden sein können, beispielsweise über USB-A oder eine andere Datenleitung. In einigen Ausführungsformen kann auch vorgesehen sein, dass Funkadapter 2 in dem Mobilgerät 1 integriert ist, und/oder Mobilgerät 1 den Funkadapter 2 aufweisen kann. In einigen Ausführungsformen können Mobilgerät 1 und Funkadapter 2 beispielsweise über Bluetooth miteinander verbunden sein und/oder Daten austauschen.

Das Mobilgeräts 1 kann ein Smartphone, ein Tablet, ein Laptop, ein PDA oder dergleichen sein oder aufweisen. Das Mobilgerät 1 kann ein Handgerät (handheld device) sein oder aufweisen.

Ein Knoten 10 kann ein Access Point, ein Router, ein Switch, ein Gateway, ein Sensor, ein Aktor, ein Medienkoppler und/oder ein Repeater 11 sein und/oder aufweisen. Ein Knoten 10 kann als Access Point, Router, Switch, Gateway, ein Sensor, ein Aktor, ein Medienkoppler und/oder Repeater 11 konfiguriert sein oder werden, und/oder entsprechende Funktionen haben. Bei dem und/oder durch das Konfigurieren kann ein Knoten 10 als ein Access Point, ein Router, ein Switch, ein Gateway, ein Sensor, ein Aktor, ein Medienkoppler und/oder ein Repeater 11 eingerichtet sein oder werden.

Der Funkadapter 2 ist dazu eingerichtet, Funkdaten von mindestens einem Knoten 10 zu empfangen. Beispielsweise kann der Funkadapter 2 über eine Funkadapterverbindung 6 mit mindestens einem oder mehreren Knoten 10 eines drahtlosen Netzwerks 101 verbunden sein. Der Funkadapter 2 kann von einem Knoten 10 ausgesendete Funkdaten empfangen. Die von dem Funkadapter 2 empfangen Funkdaten können an das Mobilgerät 1 übermittelt und/oder übertragen sein oder werden.

Es kann vorgesehen sein, dass der Funkadapter 2 Funkdaten auf einer Frequenz von 868,3 MHz empfangen kann. In einigen Ausführungsformen kann einer oder mehrere Knoten 10 Funkdaten auf einer Frequenz von 868,3 MHz aussenden. Es sind aber auch andere Frequenzen und/oder Frequenzfrequenzbänder denkbar, die Erfindung ist nicht auf einer Frequenz von 868,3 MHz beschränkt.

Es kann vorgesehen sein, dass Funkdaten ein Frame aufweisen können. Der Frame kann einen Header aufweisen, der Informationen bezüglich des Adressaten und/oder des die Funkdaten empfangenen Knoten 10, und/oder des Absenders und/oder des die Funkdaten aussenden Knotens 10 umfassen kann. Der Frame kann Nutzdaten umfassen. Die Nutzdaten können in einigen Ausführungsformen von einem oder mehreren Knoten 10 verarbeitet werden.

Das Mobilgerät 1 kann Zustandsdaten basierend auf den Funkdaten erstellen, erzeugen und/oder generieren. Die Zustandsdaten können den Zustand, Qualität und/oder Güte einer Funkverbindung repräsentieren. Das Bestimmen der Zustandsdaten kann z.B. ein Bestimmen einer Qualität und/oder Güte, beispielsweise einer Übertragungsqualität, einer Übertragungsgeschwindigkeit, Paketverluste, Downtime oder Ausfälle, oder dergleichen, einer Funkverbindung, z.B. einer Netzwerkverbindung 7 und/oder einer Funkadapterverbindung 6, umfassen. Das Bestimmen der Zustandsdaten kann z.B. ein Bestimmen einer Qualität und/oder Güte, beispielsweise einer Übertragungsqualität, einer Übertragungsgeschwindigkeit, Paketverluste, Downtime oder Ausfälle, oder dergleichen, des drahtlosen Netzwerks 101 umfassen.

Es kann vorgesehen sein, dass Zustandsdaten für einen und/oder mehrere Knoten 10 erstellt sein oder werden können, und/oder einem oder mehreren Knoten 10 zugeordnet sein oder werden können. Es kann vorgesehen sein, dass für einen, mehrere und/oder alle Knoten 10 jeweils knotenspezifische Zustandsdaten erstellt und oder zugeordnet sein oder werden können.

Beispielsweise können Zustandsdaten eine Sendefeldstärke eines jeweiligen Knotens 10 repräsentieren und/oder abbilden. Beispielsweise können Zustandsdaten eine Empfangsfeldstärke des Funkadapters 2 bezüglich eines jeweiligen Knotens 10 repräsentieren und/oder abbilden. Die Zustandsdaten können eine aus den Funkdaten abgeleiteter Wert und/oder Größe sein oder aufweisen. Die Zustandsdaten können einen Scorewert umfassen.

Es kann vorgesehen sein, für jeden Knoten 10 des drahtlosen Netzwerks 101 jeweilige Zustandsdaten zu bestimmen und/oder zu erstellen.

Anhand der Zustandsdaten kann die Qualität einer Funkverbindung, insbesondere einer Funkadapterverbindung 6 eines Knotens 10 zu dem Funkadapter 2 und/oder dem Mobilgerät 1, bestimmt, ermittelt und/oder festgelegt sein oder werden.

Das Mobilgerät 1 kann eine nicht in den Figuren gezeigt Computereinheit aufweisen. Die Computereinheit kann beispielsweise ein Prozessor sein und/oder aufweisen. Die Computereinheit kann beispielsweise dazu eingerichtet sein, die Zustandsdaten zu erstellen, zu bestimmen, zu berechnen und/oder zu ermitteln.

Basierend auf den Zustandsdaten kann eine Konfiguration des drahtlosen Netzwerks 101 eine Konfiguration des drahtlosen Netzwerks 101 erstellt sein oder werden. Das Erstellen der Konfiguration kann ein Ändern einer bestehenden Konfiguration des drahtlosen Netzwerks 101 umfassen. Mit "Erstellen einer Konfiguration" kann ein Konfigurieren des drahtlosen Netzwerks 101, und/oder eines, mehrerer oder aller Knoten 10 gemeint sein. Mit "Erstellen einer Konfiguration" kann gemeint sein, dass ein Routing des drahtlosen Netzwerks 101 erstellt und/oder geändert sein oder werden kann. Mit "Erstellen einer Konfiguration" kann gemeint sein, dass mindestens eine vor dem Konfigurieren noch nicht existierende Netzwerkverbindung 7 zwischen zwei Knoten 10 hergestellt undyoder eingerichtet sein oder werden kann, und/oder dass mindestens eine vor dem Konfigurieren bereits existierende Netzwerkverbindung 7 zwischen zwei Knoten 10 getrennt oder entfernt werden kann.

Die Konfiguration kann derart erstellt sein oder werden, dass die Qualität und/oder Güte einer, mehrere und/oder aller Netzwerkverbindungen 7 und/oder Funkadapterverbindungen 6 verbessert sein oder werden kann. Die Verbesserung der Qualität und/oder Güte kann bezogen auf eine bereits bestehende Konfiguration gemessen und/oder ermittelt sein oder werden. Ein drahtloses Netzwerk 101, und/oder eine Netzwerkverbindung 7 und/oder eine Funkadapterverbindung 6, kann beispielsweise eine höhere Qualität und/oder Güte haben, wenn eine Übertragungsgeschwindigkeit von Daten erhöht ist und/oder wird, Paketverluste kleiner sind und/oder eine Downtime und/oder Verbindungsausfälle reduziert sind oder werden.

Beim Erstellen der Konfiguration können Konfigurationsdaten mindestens eines, mehrere aller Knoten 10 erstellt sein oder werden. Es kann vorgesehen sein, dass für einen, mehrere oder alle Knoten 10 jeweils knotenspezifische, separate und/oder individuelle Konfigurationsdaten erstellt sein oder werden können. Ein Knoten 10 kann anhand der Konfigurationsdaten konfiguriert sein oder werden kann, so dass mindestens eine Netzwerkverbindung 7 des entsprechenden Knotens 10 verändert sein oder werden kann. Ein Knoten 10 kann dazu eingerichtet sein, dass er nach dem übermitteln und/oder empfangen entsprechender Konfigurationsdaten entsprechend der Konfigurationsdaten konfiguriert sein oder werden kann. Die Konfigurationsdaten können derart erstellt sein oder werden, dass die Qualität und/oder Güte des drahtlosen Netzwerks 101, insbesondere einer, mehrere und/oder aller Netzwerkverbindungen 7 und/oder Funkadapterverbindungen 6 verbessert sein oder werden kann.

Es kann vorgesehen sein, dass die Konfigurationsdaten an einen entsprechenden Knoten 10 übermittelt sein oder werden können, so dass das drahtlose Netzwerk 101 konfiguriert sein oder werden kann.

In einigen Ausführungsformen kann das Mobilfunkgerät 1 basierend auf den Zustandsdaten eine Konfiguration erstellen. Es kann vorgesehen sein, dass Mobilfunkgerät 1 basierend auf den Zustandsdaten, insbesondere knotenspezifischen Zustandsdaten, für einen, mehrere oder alle Knoten knotenspezifische, individuelle und/oder separate Konfigurationsdaten erstellen kann. Das Mobilfunkgerät 1 kann beispielsweise mit einem, mehreren oder allen Knoten 10 verbunden sein, und entsprechende Konfigurationsdaten an einen, mehrere oder alle verbundene Knoten 10 übermitteln, beispielsweise über entsprechende Funkadapterverbindungen 6.

Alternativ oder zusätzlich kann ein Inbetriebnahmewerkzeug (nicht in den Figuren gezeigt) vorgesehen sein. Es kann vorgesehen sein, dass das Mobilgerät 1 die erstellte Konfiguration, und/oder die Konfigurationsdaten an das Inbetriebnahmewerkzeug übermitteln kann. Alternativ oder zusätzlich kann die Konfiguration auch von einem externen Gerät, einem weiteren Gerät oder dergleichen an das Inbetriebnahmewerkzeug übermittelt sein oder werden. Mit dem Inbetriebnahmewerkzeug kann das drahtlose Netzwerk 101, und/oder einer, mehrere oder alle Knoten 10 des drahtlosen Netzwerks 101, konfiguriert sein oder werden. Das Inbetriebnahmewerkzeug kann ein weiteres Mobilgerät sein oder aufweisen, das mit entsprechenden Knoten 10 zu Konfiguration verbunden sein oder werden kann. Das Inbetriebnahmewerkzeug erlaubt eine zeitliches Auseinanderfallen zwischen Erstellen der Konfiguration mit dem Mobilfunkgerät und dem Konfigurieren des drahtlosen Netzwerks 101.

Das Mobilgerät 1 kann einen Speicher 8 aufweisen. Das Mobilgerät kann Funkdaten und/oder Zustandsdaten in dem Speicher 8 hinterlegen und/oder speichern. Der Speicher 8 kann ein Ringspeicher sein oder aufweisen. Es kann auch vorgesehen sein, dass die erstellte Konfiguration in dem Speicher 8 gespeichert sein oder werden kann.

Das Mobilfunkgerät 1 und/oder dessen Computereinheit kann dazu eingerichtet sein, die Funkdaten und/oder Zustandsdaten zu verarbeiten, zu analysieren und/oder davon abgeleitete Werte und/oder Größen zu bestimmen. Beispielsweise kann das Mobilfunkgerät 1 einen zeitlichen Verlauf von Funkdaten und/oder Zustandsdaten bestimmen und/oder ermitteln, so dass sich z.B. ein zeitlicher Verlauf der Qualität und/oder Güte einer Netzwerkverbindung 7, einer Funkadapterverbindung 6 und/oder des drahtlosen Netzwerks 101 bestimmt und/oder ermittelt sein oder werden kann. Es kann vorgesehen sein eine Analyse, z.B. ein zeitlichen Verlauf, für einen, mehrere oder alle Knoten 10 separat und/oder individuell durchzuführen. Es kann vorgesehen sein, dass übermittelte Funkdaten und/oder Zustandsdaten mit einem Zeitstempel oder dergleichen versehen und/oder verknüpft sein oder werden können. Damit können zeitliche Änderung und/oder Fluktuationen der Güte und/oder Qualität des drahtlosen Netzwerks 101, und/oder mindestens einer Netzwerkverbindung 7 und/oder Funkadapterverbindung 6, ermittelt und/oder bestimmt sein oder werden, in einigen Ausführungsformen auch knotenspezifisch.

Das Mobilfunkgerät 1 kann dazu eingerichtet sein, seine Position 12 und/oder die Position des Funkadapters 2 zu bestimmen. Das Mobilfunkgerät 1 kann z.B. einen geeigneten Positionssensor haben. Das Mobilfunkgerät 1 und/oder der Funkadapter 2 kann lokalisiert sein oder werden. Die Lokalisierung und/oder Positionsbestimmung kann beispielsweise über Bluetooth Low Energy (BLE), Received Signal Strength Indicators (RSSI) oder dergleichen, ggf. mit geeigneten Referenzpunkten und/oder Sendern, erfolgen. Die Positionsbestimmung kann mittels Angle of Arrival oder Time of Arrival, und/oder Triangulation und/oder Trilateration, erfolgen. Der Positionssensor kann dazu geeignet eingerichtet sein. Alternativ oder zusätzlich kann in einigen Ausführungsformen die Positionsbestimmung mit Hilfe von Satellitennavigation erfolgen, z.B. GPS. Der Positionssensor kann dazu geeignet eingerichtet sein. Es sind aber auch andere Arten der Positionsbestimmung möglich.

Es kann vorgesehen sein, dass übermittelte Funkdaten und/oder Zustandsdaten mit der Position 12 des Mobilfunkgeräts 1 und/oder des Funkadapter 2 verknüpft und/oder versehen werden. Damit können sich räumliche Änderungen und oder Fluktuationen der Güte und/oder Qualität des drahtlosen Netzwerks 101, und/oder mindestens einer Netzwerkverbindung 7 und/oder Funkadapterverbindung 6, ermittelt und/oder bestimmt sein oder werden, in einigen Ausführungsformen auch knotenspezifisch.

In einigen Ausführungsformen kann vorgesehen sein, dass das Mobilfunkgerät 1 und/oder dessen Computereinheit Funklöcher und/oder räumliche Bereiche verschiedener Güte und/oder Qualität ermitteln und/oder bestimmen kann. Es kann beispielsweise ein Schwellwert, z.B. für ein Gütekriterium und/oder Qualitätskriterium festgelegt sein, bei dessen Unterschreitung ein Funkloch und/oder ein räumlicher Bereich schlechter Güte und/oder Qualität bestimmt sein oder werden kann, beispielsweise wenn eine Mindestverbindungsgeschwindigkeit unterschritten, ein Paketverluste zu hoch und/oder eine Downtime und/oder Verbindungsausfälle zu hoch sind und/oder außerhalb vorgegebener jeweiliger Schwellwerte liegen.

Es kann vorgesehen sein, dass in Ausführungsformen, in denen ein oder mehrere Funklöcher ermittelt und/oder eine Funklochanalyse durchgeführt wird, die ermittelten Funklöcher und/oder die Funklochanalyse bei dem Erstellen der Konfiguration zu berücksichtigen. Damit kann durch eine Verbesserung der Güte und/oder Qualität durch die erstellte Konfiguration erzielt sein oder werden.

Das Mobilgerät 1 kann ein Display 3 aufweisen. Das Display 3 und/oder das Mobilgerät 1 kann dazu eingerichtet sein, Analysen, z.B. zeitliche Verläufe und/oder Funklöcher, anzuzeigen.

In einigen Ausführungsformen kann das Mobilgerät 1 und/oder dessen Computereinheit eine App 4 ausführen, anhand derer ein Benutzer Informationen bezüglich des drahtlosen Netzwerks 101, mindestens einer, mehrere oder alle Netzwerkverbindungen 7 und/oder Funkadapterverbindungen 6 abfragen, analysieren und/oder anzeigen lassen kann, beispielsweise zeitliche Verläufe, räumliche Qualitätsbereiche und/oder Funklöcher.

Es kann vorgesehen sein, dass ein oder der Benutzer über die App 4 das Empfangen von Funkdaten durch den Funkadapter 2, das Erstellen von Zustandsdaten, und/oder das Erstellen einer Konfiguration des drahtlosen Netzwerks 101 auslösen und/oder starten kann. Das Mobilfunkgerät 1 kann dazu eingerichtet sein, Steuerbefehle von dem Benutzer zu empfangen. Beispielsweise kann das Display 3 ein Touchdisplay sein, und/oder das Mobilfunkgerät 1 ein Bedienfeld aufweisen.

Alternativ oder zusätzlich kann vorgesehen sein, dass die Konfiguration automatisch und/oder selbstständig erstellt sein oder werden kann, beispielsweise durch das Mobilgerät 1. In einigen Ausführungsformen kann die Konfiguration automatisch und/oder selbstständig erstellt sein oder werden, wenn Zustandsdaten erstellt worden sind und/oder vorliegen.

Es kann vorgesehen sein, dass Zustandsdaten automatisch und/oder selbstständig erstellt sein oder werden können. In einigen Ausführungsformen können Zustandsdaten automatisch und/oder selbstständig erstellt sein oder werden, wenn Funkdaten erfasst worden sind und/oder vorliegen, und/oder an das Mobilgerät 1 übermittelt sind oder werden.

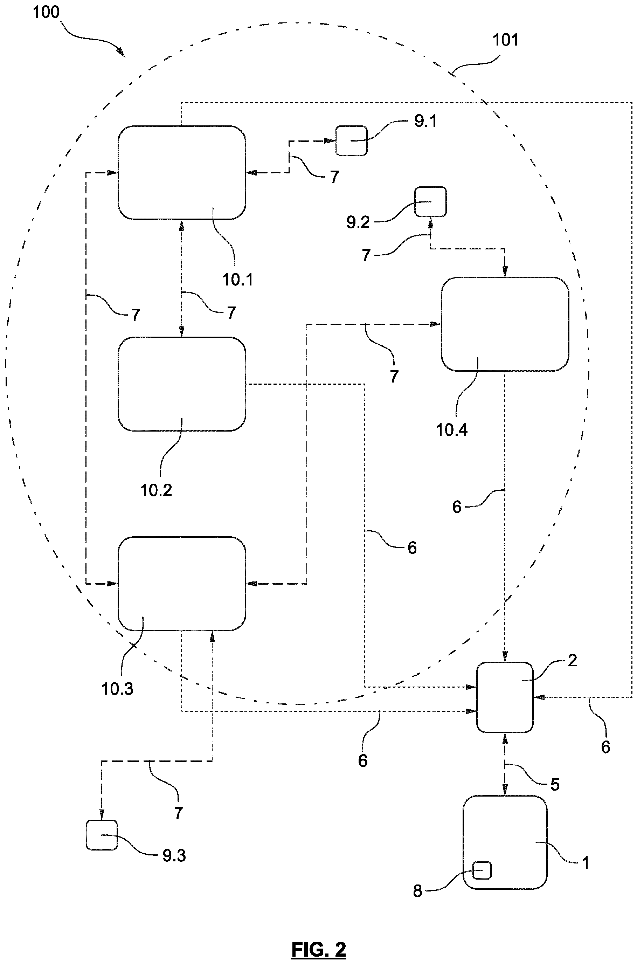

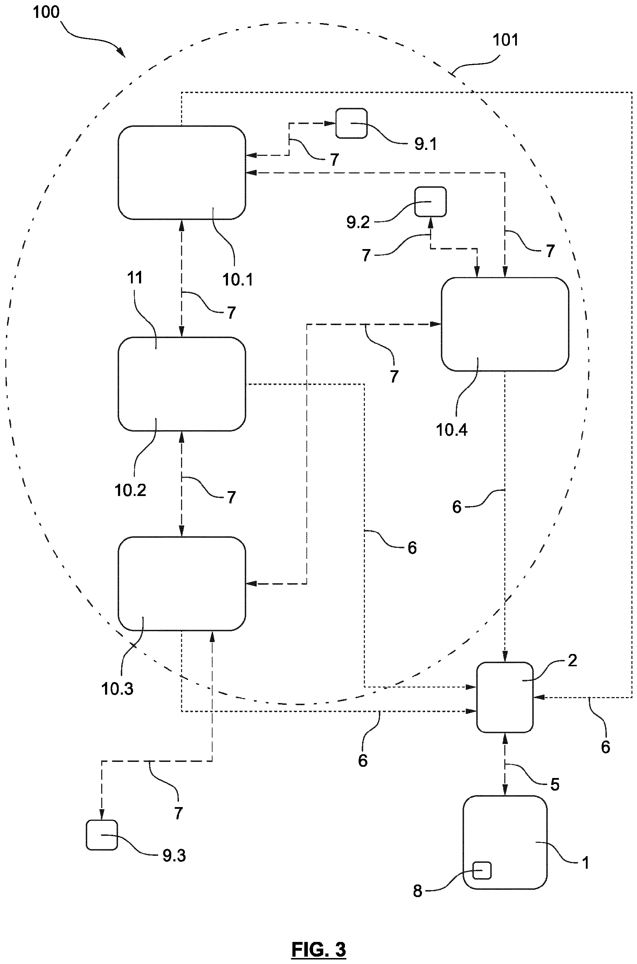

Die Figuren 2 und 3 zeigen ein beispielhaftes erfindungsgemäßes System 100. Das erfindungsgemäße System 100 weist ein drahtloses Netzwerk 101 auf. Das drahtlose Netzwerk 101 kann mindestens einem Knoten 10 aufweisen. Das System 100 weist zudem einen Funkadapter 2 und ein Mobilgerät 1 auf. Das drahtlose Netzwerk 101, Knoten 10, Mobilgerät 1 und/oder Funkadapter 2 können einen oder mehrere können eines, mehrere oder alle Merkmale und/oder Vorteile vorstehend beschriebener drahtlose Netzwerk 101, Knoten 10, Mobilgerät 1 und/oder Funkadapter 2 aufweisen und/oder diesen entsprechen.

Bei der in Figur 2 gezeigten Ausführungsformen kann das drahtlose Netzwerk 101 eine Konfiguration aufweisen, beispielsweise eine erste Konfiguration aufweisen. Beispielsweise kann ein erster Knoten 10.1 mit einem dritten Knoten 10.3 zum Datenaustausch verbunden sein. Beispielsweise kann der erste Knoten 10.1 mit einem zweiten Knoten 10.2 zum Datenaustausch verbunden sein. Beispielsweise kann der dritte Knoten 10.3 mit einem vierten Knoten Zielpunkt 10.4 zum Datenaustausch verbunden sein. Die jeweiligen Verbindungen können über Netzwerkverbindungen 7 erfolgen und/oder die jeweiligen Knoten 10 über entsprechende Netzwerkverbindungen 7 miteinander verbunden sein.

Es kann mindestens ein externes Gerät 9 vorgesehen sein. In einigen Ausführungsformen kann mindestens ein externes Gerät 9 Teil des drahtlosen Netzwerks 101 sein, und/oder das drahtlose Netzwerk 101 mindestens ein externes Gerät 9 umfassen. Beispielsweise kann ein erstes externes Gerät 9.1 und/oder ein zweites externes Gerät 9.2 Teil des drahtlosen Netzwerks 101 sein, und/oder das drahtlose Netzwerk 101 das erste externe Gerät 9.1 und/oder das zweite externe Gerät 9.2 aufweisen.

In einigen Ausführungsformen kann alternativ oder zusätzlich vorgesehen sein, dass mindestens ein externes Gerät 9 nicht Teil des drahtlosen Netzwerks 101 sein kann und/oder ist. Beispielsweise kann vorgesehen sein, dass ein drittes externes Gerät 9.3 nicht Teil des drahtlosen Netzwerks 101 ist.

Ist mindestens ein externes Gerät 9 vorgesehen, so kann mindestens eines der externen Gerät 9 mit mindestens einem Knoten 10 zum Datenaustausch verbunden sein, beispielsweise über eine Netzwerkverbindung 7. beispielsweise kann das erste externe Gerät 9.1 mit dem ersten Knoten 10.1 zum Datenaustausch verbunden sein, und/oder Daten austauschen. Beispielsweise kann das zweite externe Gerät 9.2 mit dem vierten Knoten 10.4 zum Datenaustausch verbunden sein, und/oder Daten austauschen. Beispielsweise kann das dritte externe Gerät 9.3 mit dem dritten Knoten 10.3 zum Datenaustausch verbunden sein, und/oder Daten austauschen. Die übertragenen und/oder ausgetauschten Daten können entsprechende Funkdaten sein und/oder aufweisen. Funkdaten können über eine und/oder die Netzwerkverbindung 7 übertragen sein oder werden.

Das externe Gerät 9 kann ein Peripheriegerät sein und/oder aufweisen. Ein externes Gerät 9 kann beispielsweise ein Drucker, ein Scanner, ein Computergerät, ein weiteres Mobilgerät, ein Laptop, ein Smartphone, ein Tablet sein oder aufweisen. Alternativ oder zusätzlich kann ein externes Gerät 9 beispielsweise ein Server, eine Datenbank und/oder dergleichen sein oder aufweisen.

Es kann vorgesehen sein, dass externe Gerät 9 über das drahtlose Netzwerk 101 miteinander Daten austauschen können. Es kann vorgesehen sein, dass Daten von einem externen Gerät 9 über die Knoten 10 des drahtlosen Netzwerks 101 an ein weiteres externes Gerät 9 übermittelt sein oder werden können.

Mit einer Konfiguration des drahtlosen Netzwerks 101 kann ein vorgegebenes Routing von Daten, beispielsweise Funkdaten, gemeint sein. Eine Konfiguration des drahtlosen Netzwerks 101 kann beispielsweise definieren, welche Knoten 10 des drahtlosen Netzwerks 101 miteinander Daten austauschen können und/oder zum Datenaustausch miteinander eingerichtet sein können.

Der Funkadapter 2 kann mit mindestens einem, mehreren und/oder allen Knoten 10 des drahtlosen Netzwerks 101 verbunden sein, und/oder von mindestens einem, mehreren und/oder allen Knoten 10 des drahtlosen Netzwerks 101 Funkdaten empfangen. Knoten 10 und Funkadapter 2 können über eine Funkadapterverbindung 6 miteinander verbunden sein.

In einigen Ausführungsformen kann vorgesehen sein, dass Funkadapter 2 einige, mehrere oder alle von einem, mehreren oder allen Knoten 10 ausgesandten Funkdaten abgehört und/oder empfängt. Es kann vorgesehen sein, dass die von einem Knoten 10 über eine Netzwerkverbindung 7 ausgesandten und/oder übertragenen Daten mit Daten, die über eine Funkadapterverbindung 6 ausgesandt und/oder übertragen sein oder werden können, identisch sein können. Die über eine Funkadapterverbindung 6 übertragenen und/oder ausgesandten Daten können Funkdaten sein oder aufweisen. Fu Funkdaten können über eine oder die Funkadapterverbindung 6 übertragen sein und/oder werden.

Auch wenn in Figur 2 eine Funkadapterverbindung 6 gezeigt ist, so kann in einigen Ausführungsformen die Funkadapterverbindung 6 im Wesentlichen den Netzwerkverbindungen 7 entsprechen. In anderen Worten kann in einigen Ausführungsformen vorgesehen sein, dass der Funkadapter 2 keine separate Verbindung zu einem, mehreren und/oder allen Knoten 10 des drahtlosen Netzwerks 101 aufbaut, sondern die über die entsprechenden Netzwerkverbindungen 7 von den Knoten ausgesandten Funkdaten empfangen und/oder verarbeiten kann.

Es kann vorgesehen sein, dass eine, mehrere und/oder alle Funkadapterverbindungen 6 und Netzwerkverbindungen 7 auf derselben Frequenz Daten übertragen. Es kann vorgesehen sein, dass eine Netzwerkverbindung 7 und eine Funkadapterverbindung 6 mittels desselben elektromagnetischen Felds Daten übertragen. Auch wenn in den Figuren 2 und 3 separate Netzwerkverbindungen 7 und Funkadapterverbindungen 6 gezeigt sind, können in einigen Ausführungsformen separate Verbindungen zwischen Funkadapter 2 und mindestens einem, mehreren oder allen der Knoten 10 verzichtbar, nicht vorhanden und/oder nicht vorgesehen sein.

Es kann vorgesehen sein, dass der Funkadapter 2 von einem, mehreren oder allen Knoten 10 ausgesandte Funkdaten, die an einen, mehrere oder alle anderen Knoten 10 adressiert sind, empfangen kann. Damit kann der Funkadapter 2 Daten, z.B. Funkdaten, die von den Knoten 10 in einem Regelbetrieb, beispielsweise bei einer üblichen und/oder normalen Verwendung, ausgesendet sind und/oder werden, empfangen. Somit kann auf einen gesonderten Testbetrieb und/oder das aussenden von speziellen und/oder vorgegebenen Testdaten zur Durchführung des Verfahrens verzichtet sein und/oder werden.

In einigen Ausführungsformen kann alternativ oder zusätzlich vorgesehen sein, dass der Funkadapter 2 über eine separate, von einer oder mehreren Netzwerkverbindungen 7 verschiedene, Funkadapterverbindung 6 mit einem Knoten 10 verbunden sein kann und/oder Daten austauschen kann. Es kann vorgesehen sein, dass die von einem Knoten 10 über eine Netzwerkverbindung 7 ausgesandten und/oder übertragenen Daten von Daten, die über eine Funkadapterverbindung 6 ausgesandt und/oder übertragen sein oder werden können, verschieden sein können. Es kann vorgesehen sein, dass eine Netzwerkverbindung 7 und eine Funkadapterverbindung 6 mittels verschiedener elektromagnetischer Felder Daten übertragen können.

Figur 3 zeigt ein System 100 mit einem drahtlosen Netzwerk 101, das eine von dem drahtlosen Netzwerk 101 der Figur 2 verschiedene Konfiguration, z.B. eine zweite Konfiguration, aufweist. Beispielsweise kann das in Figur 3 gezeigte drahtloses Netzwerk 101 dieselben Knoten 10, beispielsweise erster Knoten 10.1, zweiter Knoten 10.2, dritter Knoten 10.3 und vierter Knoten 10.4, aufweisen.

Beispielsweise kann der zweite Knoten 10.2 als Repeater 11 konfiguriert sein, der von dem ersten Knoten 10.1 empfangene Daten an den dritten Knoten 10.3 weiterleiten kann. Beispielsweise kann das drahtlose Netzwerk 101 derart konfiguriert sein, dass der dritte Knoten 10.3 mit dem vierten Knoten 10.4 Daten, z.B. Funkdaten, austauschen kann.

Es kann vorgesehen sein, dass beispielsweise der erste Knoten 10.1, verglichen z.B. mit der in Figur 2 dargestellten Konfiguration, nicht mehr direkt Daten mit dem dritten Knoten 10.3 austauschen kann und/oder nicht mehr zum direkten Datenaustausch mit den dritten Knoten 10.3 eingerichtet sein kann, sondern indirekt über den zweiten Knoten 10.2 bzw. Repeater 11. Es kann vorgesehen sein, dass keine Netzwerkverbindung 7 zwischen dem ersten Knoten 10.1 und dem dritten Knoten 10.3 vorliegt.

Beispielsweise kann dadurch, dass Knoten 10.2 als Repeater konfiguriert ist, eine Übertragung von Daten zwischen dem ersten Knoten 10.1 und dem dritten Knoten 10.3 verbessert sein oder werden. Bei der beispielhaft in Fig. 2 gezeigten Anordnung der Knoten 10 kann die Netzwerkverbindung 7 zwischen dem ersten Knoten 10.1 und dem dritten Knoten 10.3 (und/oder umgekehrt) schwach sein, da die Knoten vergleichsweise weit voneinander beabstandet sein können. Das drahtlose Netzwerks 101 kann eine vergleichsweise niedrigere Qualität und/oder Güte haben. Dadurch, dass der zwischen dem ersten Knoten 10.1 und dem dritten Knoten 10.3 angeordnete zweite Knoten 10.2 als Repeater 11 konfiguriert sein kann (vgl. z.B. Fig. 3), kann sich eine gute Netzwerkverbindung 7 zwischen dem ersten Knoten 10.1 und dem zweiten Knoten 10.2 bzw. Repeater 11 ergeben, und eine gute Netzwerkverbindung 7 zwischen dem zweiten Knoten 10.2 bzw. Repeater 11 und dem dritten Knoten 10.3 ergeben, so dass die Übertragung von erstem Knoten 10.1 über den Repeater 11 bzw. zweiten Knoten 10.2 an den dritten Knoten 10.3 (und/oder umgekehrt) verbessert sein kann. Das in Fig. 3 gezeigte drahtlose Netzwerk 101 kann eine verglichen mit dem in Fig. 2 gezeigten drahtlosen Netzwerk 101 verbesserte Güte und/der Qualität haben.

Das drahtlose Netzwerk 101 kann beispielsweise ausgehend von der in Figur 2 gezeigten Konfiguration derart konfiguriert sein oder werden, dass sich die in Figur 3 gezeigte Konfiguration ergeben kann. Beim Konfigurieren eines oder des drahtlosen Netzwerks 101 kann eine oder mehrere Verbindungen zwischen einem, mehreren und/oder allen anderen Knoten 10 hinzugefügt und/oder entfernt sein oder werden.

Beispielsweise kann durch die in Fig. 3 beim Konfigurieren neu erstellte Netzwerkverbindung 7 zwischen dem vierten Knoten 10.4 und dem ersten Knoten 10.1 (vergl. z.B. mit Fig. 2) zu einer verbesserten Übertragung von Daten zwischen dem ersten Knoten 10.1 und dem vierten Knoten 10.4 (und/oder umgekehrt) führen. Das in Fig. 3 gezeigte drahtlose Netzwerk 101 kann eine verglichen mit dem in Fig. 2 gezeigten drahtlosen Netzwerk 101 verbesserte Güte und/der Qualität haben.

Es kann vorgesehen sein, dass ausgehend von einer Konfiguration des drahtlosen Netzwerks 101, z.B. einer bereits bestehenden Konfiguration, eine Konfiguration des drahtlosen Netzwerks 101 erstellt sein oder werden kann. Dazu können z.B. die auf eine Konfiguration eines drahtlosen Netzwerks 101 zurückgehenden und/oder basierenden Funkdaten, die von den Knoten 10 ausgesendet und/oder übertragen sein oder werden können, von dem Funkadapter 2 empfangen sein oder werden. Die von dem Funkadapter 2 empfangen Funkdaten können an das Mobilgerät 1 übertragen sein oder werden. Das Mobilgerät 1 kann basierend auf den Funkdaten Zustandsdaten erstellen. Basierend auf den Zustandsdaten kann eine Konfiguration des drahtlosen Netzwerks 101 erstellt sein oder werden, die sich von der vorherigen Konfiguration unterscheiden kann. Die Konfiguration kann beispielsweise von dem Mobilgerät 1 erstellt sein oder werden. Das Erstellen einer Konfiguration kann ein Ändern einer vorherigen Konfiguration sein oder aufweisen. Das Erstellen einer Konfiguration kann als "Konfigurieren" bezeichnet sein oder werden.

Beim Konfigurieren eines oder des drahtlosen Netzwerks 101 kann mindestens ein Knoten 10 derart eingerichtet sein oder werden, dass er Daten, z.B. Funkdaten, an mindestens einen anderen Knoten 10 sendet und/oder adressiert, an den er vor dem Konfigurieren keine Daten gesendet und/oder adressiert hat. Beim Konfigurieren eines oder des drahtlosen Netzwerks 101 kann mindestens ein Knoten 10 derart eingerichtet sein oder werden, dass er Daten, z.B. Funkdaten, an mindestens einen anderen Knoten 10 nicht mehr sendet und/oder adressiert, an den er vor dem Konfigurieren Daten gesendet und/oder adressiert hat. Beim Konfigurieren eines oder des drahtlosen Netzwerks 101 kann mindestens ein Knoten 10 derart eingerichtet sein oder werden, dass Daten, z.B. Funkdaten, die vor dem Konfigurieren an ihn adressiert waren und/oder die er von mindestens einem anderen Knoten empfangen hat, nicht mehr empfängt und/oder verarbeitet. Netzwerks 101 kann mindestens ein Knoten 10 derart eingerichtet sein oder werden, dass Daten, z.B. Funkdaten, die vor dem Konfigurieren nicht an ihn adressiert waren und/oder die er von mindestens einem anderen Knoten empfangen hat, empfängt und/oder verarbeitet.

Es kann vorgesehen sein, dass beim Konfigurieren des drahtlosen Netzwerks 101 ein oder das Routing von Daten verändert wird oder ist.

Es kann vorgesehen sein, dass die Konfiguration eines oder des drahtlosen Netzwerks 101 basierend auf Zustandsdaten erstellt und/oder verändert sein oder werden kann.

Es kann vorgesehen sein, dass die Konfiguration derart erstellt und/oder verändert sein oder werden kann, dass eine Qualität des drahtlosen Netzwerks 101, z.B. eine Übertragungsqualität, verbessert sein oder werden kann.

In einigen Ausführungsformen kann iterativ eine Konfiguration erstellt sein oder werden. In einigen Ausführungsformen kann nach der Durchführung des Verfahrens das Verfahren mindestens einmal wiederholt sein oder werden, wobei bei einer Wiederholung des Verfahrens das drahtlose Netzwerk 101 zunächst eine vorher bestimmte Konfiguration haben kann, und die erstellte Konfiguration von dieser verschieden sein kann.

Bei dem iterativen Erstellen der Konfiguration kann vorgesehen sein, dass nach dem Erstellen einer Konfiguration die Güte und/oder Qualität des drahtlosen Netzwerks 101, und/oder mindestens einer Netzwerkverbindung 7 und/oder Funkadapterverbindung 6, überprüft und mit der vorherigen Konfiguration verglichen sein oder werden kann. Es kann vorgesehen sein, dass die erstellte Konfiguration verworfen werden kann, wenn diese zu keiner Verbesserung der Güte und/oder Qualität geführt hat. In einigen Ausführungsformen kann anschließend mindestens einmal das Verfahren wiederholt werden, ausgehend von der vor der verworfenen Konfiguration vorhandenen Konfiguration des drahtlosen Netzwerks 101, wobei eine von der verworfenen Konfiguration verschiedene Konfiguration erstellt sein oder werden kann. Diese neu erstellte Konfiguration, die von der verworfenen Konfiguration verschieden sein kann, kann anschließend wiederum auf Güte und/oder Qualität überprüft sein oder werden. Es kann vorgesehen sein, dass Güte und/oder Qualität iterativ optimiert sind oder werden.

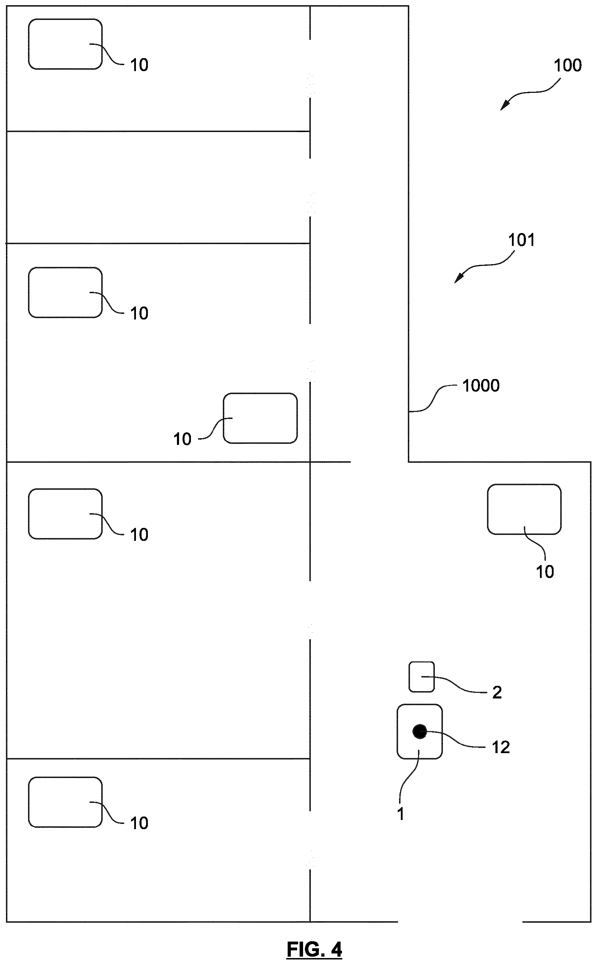

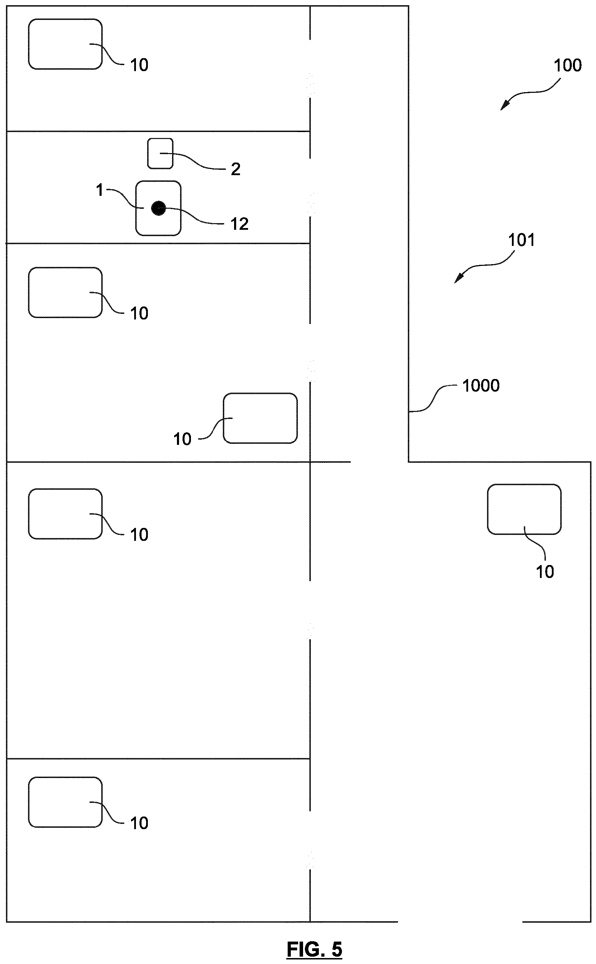

Die Figuren 4 und 5 zeigen ein beispielhaftes System 100 mit mindestens einem Knoten 10, einem Funkadapter 2 und einem Mobilgerät 1. Die Knoten 10 Knoten eines drahtlosen Netzwerks 101. Das System 100 weist das drahtlose Netzwerk 101 auf. Das drahtlose Netzwerk 101, Knoten 10, Mobilgerät 1 und/oder Funkadapter 2 können einen oder mehrere können eines, mehrere oder alle Merkmale und/oder Vorteile vorstehend beschriebener drahtlose Netzwerk 101, Knoten 10, Mobilgerät 1 und/oder Funkadapter 2 aufweisen und/oder diesen entsprechen.

Das drahtlose Netzwerkt 101 und/oder die Knoten 10 des drahtlosen Netzwerks 101 können z.B. in einem Gebäude 1000 angeordnet sein, wie in den Fig. 4 bis 7 angedeutet. Das Gebäude 1000 kann beispielsweise ein Rohbau sein. Alternativ kann das Gebäude z.B. ein fertiges Gebäude sein. Das Gebäude kann beispielsweise ein Wohngebäude oder ein Bürogebäude, eine Halle, eine Fabrikanalage oder dergleichen sein oder aufweisen.

Wie in den Figuren 4 und 5 dargestellt, kann vorgesehen sein, dass Funkdaten von dem Funkadapter 2 an verschiedenen Positionen 12 des Mobilgeräts 1 und/oder des Funkadapter 2 empfangen sein oder werden können, und entsprechend an verschiedenen Positionen 12 Zustandsdaten erstellt sein oder werden können. Die Zustandsdaten können wie oben beschrieben beispielsweise mit der Position 12 verknüpft sein oder werden. Damit lassen sich Funkdaten und/oder Zustandsdaten, und/oder darauf basierende Analysen, weitere Werte und/oder Größen, in Abhängigkeit von der Position 12 und/oder positionsabhängig bestimmen, insbesondere im Raum bestimmen. Damit kann eine Konfiguration erstellt sein oder werden, die eine Verbesserung der Qualität, Zuverlässigkeit und/oder Güte erzielen kann. Werden iterativ und/oder wiederholt Konfigurationen erstellt und/oder die Qualität, Zuverlässigkeit und/oder Güte verbessert, so kann durch Berücksichtigung der verschiedenen Positionen 12 die Anzahl Iterationen und/oder Wiederholungen verringert sein oder werden, und/oder die Verbesserung der Güte, Zuverlässigkeit und/oder Qualität der Iteration und/oder Wiederholung erhöht sein oder werden.

Es kann vorgesehen sein, dass Materialtypen zum Bauplan, Architekturplan oder Grundriss ergänzt werden können, beispielsweise Materialien von Wänden oder sonstigen Bauten. Es kann vorgesehen sein, derartige Angaben zur Analyse und/oder Konfiguration genutzt und/oder berücksichtigt werden können, um eine Verbesserung der Qualität, Zuverlässigkeit und/oder der Güte erzielt werden kann.

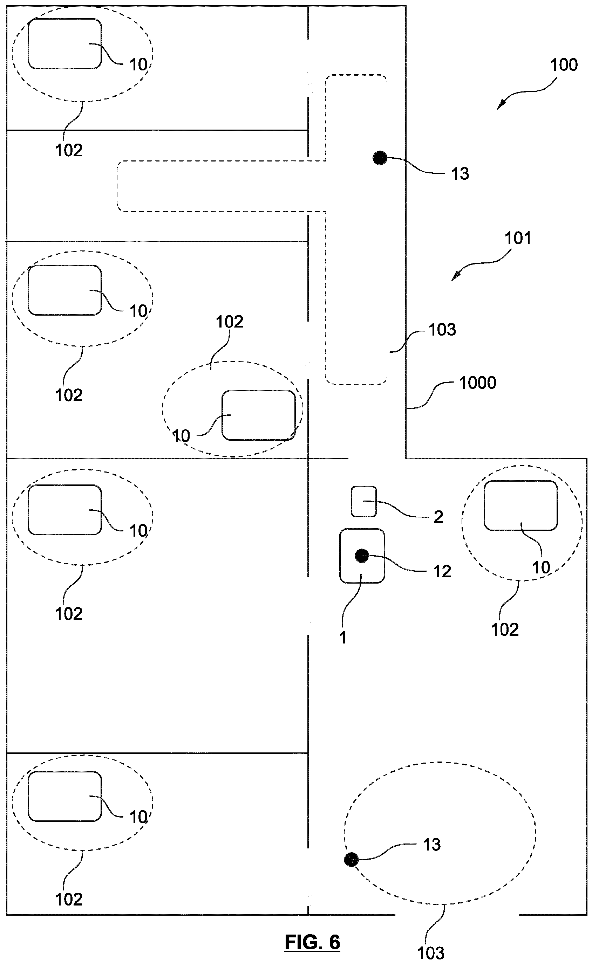

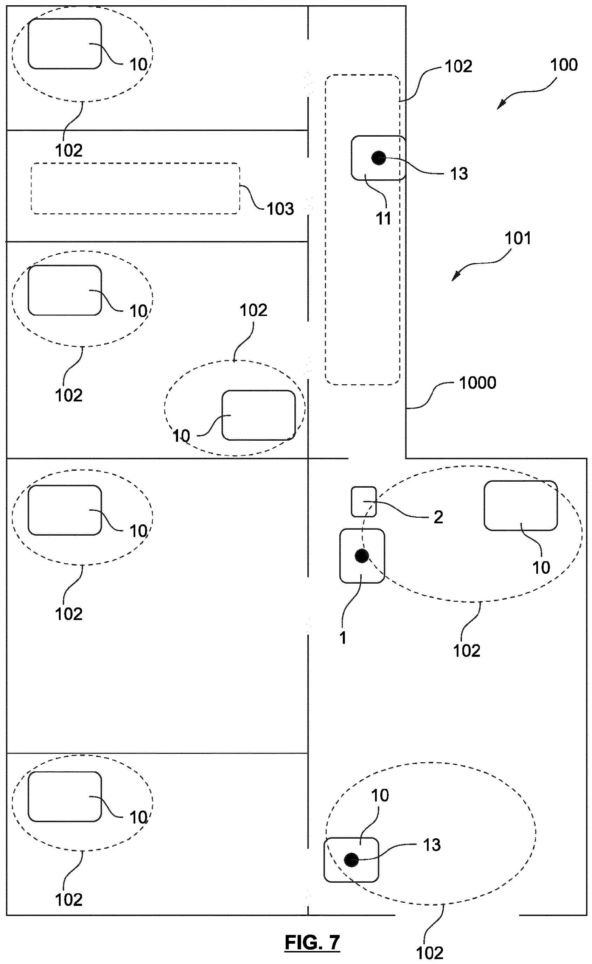

Wie in den Figuren 6 und 7 gezeigt können in einigen Ausführungsformen, wie z.B. in den Figuren 6 und 7 gezeigt, räumliche Bereiche verschiedener Qualität bestimmt sein oder werden. Die in den Figuren gezeigten Bereiche guter Qualität 102 (und/oder guter Güte, bzw. hoher Qualität und/oder Güte) und Bereiche schlechter Qualität 103 (und/oder guter Güte, bzw. niedriger Qualität und/oder Güte) sind beispielhaft. Es sind weitere Abstufungen, insbesondere mehrere Zwischenstufen denkbar.

In einigen Ausführungsformen kann ein oder der Bereich schlechter Qualität ein Funkloch sein oder aufweisen, und/oder einem Funkloch entsprechen.

Zwischen den Bereichen guter Qualität 102 und schlechter Qualität 103 befinden sich beispielsweise Bereiche durchschnittlicher Qualität (und/oder Güte, bzw. mittlerer Qualität und/oder Güte). Die in den Figuren 6 und 7 dargestellten gestrichelten Linien können entsprechende Bereichsgrenzen darstellen. Die verschiedenen Bereiche können in Abhängigkeit geeigneter Schwellwerte bestimmt sein oder werden. Alternativ kann auch nur ein Schwellwert vorgesehen sein, so dass keine Zwischenbereiche zwischen guter und schlechter Qualität existieren können.

Wie in den Figuren 6 und 7 dargestellt, können die Bereiche guter Qualität 102, durchschnittlicher Qualität und schlechter Qualität 103 beispielsweise von der räumlichen Anordnung der Knoten 10, der Anzahl Knoten 10, der Konfiguration des drahtlosen Netzwerks 101, und/oder der Geometrie des Gebäudes, z.B. dessen Architektur, Raumaufteilung oder dergleichen, abhängen.

In einigen Ausführungsformen kann vorgesehen sein, dass ein Plan des Gebäudes, z.B. ein Bauplan, ein Architekturplan, ein Grundriss oder dergleichen, vorliegen und/oder bekannt sein kann, insbesondere dem Mobilgerät 1 vorliegen und/oder bekannt sein kann, so dass der Plan bei dem Erstellen der Zustandsdaten berücksichtigt sein oder werden können, und/oder mit den Zustandsdaten verknüpft sein oder werden können. In einigen Ausführungsformen kann vorgesehen sein, dass der Plan bei dem Erstellen der Konfiguration berücksichtigt sein oder werden kann. Damit kann eine Konfiguration erstellt sein oder werden, die eine Verbesserung der Qualität und/oder Güte erzielen kann. Werden iterativ und/oder wiederholt Konfigurationen erstellt und/oder die Qualität und/oder Güte verbessert, so kann durch Berücksichtigung des Plans die Anzahl Iterationen und/oder Wiederholungen verringert sein oder werden, und/oder die Verbesserung der Güte und/oder Qualität der Iteration und/oder Wiederholung erhöht sein oder werden.

In einigen Ausführungsformen kann vorgesehen sein, dass die Standorte eines, mehrerer oder aller Knoten 10 vorliegen und/oder bekannt sein können, insbesondere dem Mobilgerät 1 vorliegen und/oder bekannt sein können, so dass die entsprechenden Standorte bei dem Erstellen der Zustandsdaten berücksichtigt sein oder werden können, und/oder mit den Zustandsdaten verknüpft sein oder werden können. In einigen Ausführungsformen kann vorgesehen sein, dass die entsprechenden Standorte bei dem Erstellen der Konfiguration berücksichtigt sein oder werden können. Damit kann eine Konfiguration erstellt sein oder werden, die eine Verbesserung der Qualität und/oder Güte erzielen kann. Werden iterativ und/oder wiederholt Konfigurationen erstellt und/oder die Qualität und/oder Güte verbessert, so kann durch Berücksichtigung der bekannten Standorte die Anzahl Iterationen und/oder Wiederholungen verringert sein oder werden, und/oder die Verbesserung der Güte und/oder Qualität der Iteration und/oder Wiederholung erhöht sein oder werden.

In einigen Ausführungsformen kann das Mobilfunkgerät 1 einen oder mehrere Orte 13 bestimmen, ermitteln und/oder vorschlagen, an denen jeweils ein Knoten 10 aufgestellt und/oder angebracht sein oder werden kann. Der Ort 13 kann ein Ort sein, der, wenn an dem Ort 13 ein Knoten 10 aufgestellt und/oder angebracht, und mit dem drahtlosen Netzwerk 10 verbunden ist, eine Güte und/oder Qualität des drahtlosen Netzwerks 101, und/oder mindestens einer Netzwerkverbindung 7 und/oder Funkadapterverbindung 6 verbessern kann, und/oder eine Verbesserung zumindest erwartbar und/oder wahrscheinlich sein kann. Es kann vorgesehen sein, dass einem oder dem Benutzer ein entsprechender Ort 13 auf dem Mobilgerät 1, beispielsweise dem Display 3, angezeigt sein oder werden kann. In einigen Ausführungsformen kann vorgesehen sein, dass an dem Ort 13 ein Repeater 11 aufgestellt sein oder werden kann, und/oder der entsprechende Knoten 10 als Repeater 11 konfiguriert sein oder werden kann. Alternativ oder zusätzlich kann der an dem Ort 13 aufgestellte Knoten 10 aber auch eine andere Funktion haben. Wie in der Zusammenschau der Figuren 6 und 7 beispielsweise gezeigt, kann durch das Aufstellen weiterer Knoten 10 an Ort 13 und dem Hinzufügen der entsprechenden Knoten 10 zu dem drahtlosen Netzwerk 101 die Güte und/oder Qualität verbessert sein oder werden.

Alternativ oder zusätzlich kann vorgesehen sein, dass das Mobilfunkgerät 1 für mindestens einen der Knoten 10 einen verschiedenen Aufstellungsort vorschlagen und/oder bestimmen kann. In anderen Worten kann vorgesehen sein, dass das Mobilgerät 1 ermitteln kann, das zur Erhöhung der Qualität und/oder Güte mindestens ein Knoten 10 räumlich anders platziert sein oder werden kann oder sollte.

Mindestens zwei, mehrere oder alle der verschiedenen Methoden, Schritte und Teilaspekte können miteinander kombinierbar sein. Beispielsweise kann bei dem Erstellen einer Konfiguration sowohl ein Plan des Gebäudes als auch ein Ort 13 und/oder ein an einem Ort 13 neu aufgestellten und dem drahtlosen Netzwerk 101 hinzugefügte Knoten 10 berücksichtigt sein oder werden. Beispielsweise kann bei dem Erstellen einer Konfiguration alternativ oder zusätzlich mindestens eine Position 12 und/oder eines oder mehrere Funklöcher und/oder Bereiche schlechter Qualität 103 berücksichtigt sein oder werden. Diese Kombination sind lediglich beispielhaft und nicht abschließend.

Es kann vorgesehen sein, dass der Plan des Gebäudes, z.B. ein Bauplan, ein Architekturplan, ein Grundriss, verwendete Materialen wie z.B. Baumaterialien oder Baustoffe, oder dergleichen, die Orte 13, Positionen 12, Funklöcher und/oder Bereiche bestimmter und/oder von dem Benutzer ausgewählter Qualität oder dergleichen einem Benutzer angezeigt sein oder werden können, beispielsweise mittels der App 4 und/oder auf dem Display 3. In einigen Ausführungsformen können mindestens zwei oder mehrere dieser einander überlagert angezeigt sein oder werden. Beispielsweise kann dem angezeigten Plan eine oder die Funklochanalyse, Funklöcher, Bereiche vorgegebener und/oder von dem Benutzer ausgewählter Qualität, Standorte der Knoten, vorgeschlagene Orte zum Aufstellen weiterer Knoten, oder dergleichen, überlagert sein.

Die in den Ansprüchen, der Beschreibung und den Figuren offenbarten Merkmale können einzeln oder in beliebiger Kombination für die Verwirklichung der Erfindung wesentlich sein.

### Bezugszeichenliste

- 1: Mobilgerät
- 2: Funkadapter
- 3: Display
- 4: App
- 5: Mobilgerätverbindung
- 6: Funkadapterverbindung
- 7: Netzwerkverbindung
- 8: Speicher
- 9: externes Gerät
- 10: Knoten
- 11: Repeater
- 12: Position
- 13: Ort
- 100: System
- 101: drahtloses Netzwerk
- 102: Bereich guter Qualität
- 103: Bereich schlechter Qualität
- 1000: Gebäude

## Patentansprüche

1. Verfahren zum Konfigurieren eines drahtlosen Netzwerks (101), umfassend die folgenden Schritte:
- Aussenden von Funkdaten durch Knoten (10) des drahtlosen Netzwerks (101);
- Empfangen der Funkdaten mit einem Funkadapter (2);
- Übertragen der Funkdaten von dem Funkadapter (2) an ein mit dem Funkadapter (2) zum Datenaustausch verbundenes Mobilgerät (1);
- Erstellen von mindestens einem, mehreren oder allen Knoten (10) zugeordneten Zustandsdaten mit dem Mobilgerät (1) basierend auf den Funkdaten, wobei die Zustandsdaten den Zustand einer Funkverbindung eines entsprechenden Knotens (10) repräsentieren, bevorzugt eine Empfangsfeldstärke des Funk-Adapters (2) und/oder eine Sendefeldstärke des Knotens (10);
- Erstellen einer Konfiguration des drahtlosen Netzwerks (101) basierend auf den Zustandstaten, wobei die Konfiguration bevorzugt von dem Mobilgerät (1) erstellt wird.

2. Verfahren nach Anspruch 1, bei dem beim Erstellen der Konfiguration Konfigurationsdaten mindestens eines, mehrerer oder aller Knoten (10) erstellt werden, wobei bevorzugt die Konfigurationsdaten an die entsprechenden Knoten (10) übertragen werden, so dass das Netzwerk (101) konfiguriert wird, und/oder wobei die Konfigurationsdaten an ein Inbetriebnahme-Werkzeug übertragen werden.

3. Verfahren nach einem der vorangegangenen Ansprüche, bei dem das Verfahren beim Aussenden der Funkdaten das drahtlose Netzwerk (101) eine erste Konfiguration aufweist, und beim Erstellen der Konfiguration eine von der ersten Konfiguration verschiedene zweite Konfiguration erstellt wird.

4. Verfahren nach Anspruch 3, bei dem das Verfahren mindestens einmal wiederholt wird, wobei beim Wiederholen des Verfahrens beim Aussenden der Funkdaten das drahtlose Netzwerk (101) die zweite Konfiguration aufweist, und beim Erstellen der Konfiguration eine von der zweiten Konfiguration verschiedene dritte Konfiguration, bevorzugt eine von der ersten und der zweiten Konfiguration verschiedene dritte Konfiguration, erstellt wird.

5. Verfahren nach einem der vorangegangenen Ansprüche, bei dem beim Erstellen der Konfiguration und/oder der Konfigurationsdaten mindestens einer der Knoten (10) als Repeater (11) konfiguriert wird, und/oder bei dem beim Erstellen der Konfiguration eine Kommunikationsverbindung, bevorzugt eine Netzwerkverbindung (7), mindestens eines Knotens (10) verändert wird.

6. Verfahren nach einem der vorangegangenen Ansprüche, bei dem die Funkdaten und/oder die Zustandsdaten in einem Speicher des Mobilgeräts (1) hinterlegt werden.

7. Verfahren nach einem der vorangegangenen Ansprüche, bei dem die Zustandsdaten mindestens eines der Knoten (10), und/oder eine basierend auf den Zustandsdaten erstellte Analyse, auf dem Mobilgerät (1) angezeigt werden, wobei bevorzugt die Analyse von dem Mobilgerät (1) erstellt wird.

8. Verfahren nach einem der vorangegangenen Ansprüche, bei dem bei oder nach dem Übertragen der Funkdaten an das Mobilgerät (1), und/oder bei oder nach dem Erstellen der Zustandsdaten, eine Position (12) des Mobilgeräts (1) mit den Zustandsdaten verknüpft wird.

9. Verfahren nach einem der vorangegangenen Ansprüche, bei dem Zustandsdaten eines, mehrerer oder aller Knoten (10) an mindestens zwei verschiedenen Positionen (12) des Mobilgeräts (1) erstellt werden, wobei bevorzugt basierend auf den Zustandsdaten eines, mehrerer oder aller Knoten (10) und/oder den jeweiligen Positionen (12) des Mobilgeräts Funklöcher ermittelt werden, bevorzugt von dem Mobilgerät (1) ermittelt werden.

10. Verfahren nach einem der vorangegangenen Ansprüche, bei dem basierend auf den Zustandsdaten und/oder der Konfiguration mindestens ein Ort (13) bestimmt wird, bevorzugt von dem Mobilgerät (1) bestimmt wird, und ein Knoten (10), bevorzugt ein Repeater (11), an dem entsprechend bestimmten Ort (13) aufgestellt und dem drahtlosen Netzwerk (101) hinzugefügt wird, wobei bevorzugt nach dem Hinzufügen bei einer Wiederholung des Verfahrens der Ort (13) des hinzugefügten Knotens verändert wird, und bevorzugt die Konfiguration und/oder die Zustandsdaten vor der Veränderung des Orts (13) und nach der Veränderung des Orts (13) verglichen werden.

11. System (100) zum Konfigurieren eines drahtlosen Netzwerks (101), umfassend ein drahtloses Netzwerk (101) aufweisend mindestens einen oder mehrere Knoten (10), einen Funkadapter (2) und ein mit dem Funkadapter (2) zum Datenaustausch verbundenes Mobilgerät (1), wobei das System (100) dazu eingerichtet ist, das Verfahren nach einem der vorangegangenen Ansprüche 1 bis 10 durchzuführen, wobei bevorzugt das Mobilgerät (1) dazu eingerichtet ist, eine Konfiguration des drahtlosen Netzwerks (101) zu erstellen.

12. System (100) nach Anspruch 11, wobei der Funkadapter (2) mit dem Mobilgerät (1) drahtlos verbunden ist, bevorzugt über Bluetooth, oder der Funkadapter (2) in das Mobilgerät (1) integriert ist und/oder das Mobilgerät (1) den Funkadapter (2) aufweist.

13. System (100) nach einem der vorangegangenen Ansprüche 11 oder 12, bei dem mindestens einer der Knoten (10) vor einer Durchführung des Verfahrens nicht als Repeater (11) konfiguriert ist, und nach der Durchführung des Verfahrens als Repeater (11) konfiguriert ist.

14. System (100) nach einem der vorangegangenen Ansprüche 11 bis 13, bei dem die Konfiguration des drahtlosen Netzwerks Konfigurationsdaten mindestens eines, mehrerer oder aller Knoten (10) umfasst, wobei bevorzugt das Mobilgerät (1) dazu eingerichtet ist, die Konfiguration und/oder die Konfigurationsdaten an ein Inbetriebnahme-Werkzeug und/oder einen zu konfigurierenden Knoten (10) und/oder zu übertragen, so dass die jeweiligen Knoten (10) durch die Konfigurationsdaten konfiguriert sind.

15. System (100) nach einem der vorangegangenen Ansprüche 11 bis 14, bei dem das Mobilgerät (1) eine Benutzerschnittstelle aufweist und das Mobilgerät (1) dazu eingerichtet ist, Befehle von einem Benutzer zu empfangen und zu verarbeiten.

16. System (100) nach einem der vorangegangenen Ansprüche 1 bis 15, bei dem das Mobilgerät (1) ein Display (3) aufweist und dazu eingerichtet ist, Zustandsdaten und/oder eine basierend auf den Zustandsdaten erstellte Analyse, bevorzugt eine Funklochanalyse, darzustellen.

## Geänderte Patentansprüche

### Geänderte Patentansprüche gemäss Regel 137(2) EPÜ.

1. Verfahren zum Konfigurieren eines drahtlosen Netzwerks (101), umfassend die folgenden Schritte:
- Aussenden von Funkdaten durch Knoten (10) des drahtlosen Netzwerks (101);
- Empfangen der Funkdaten mit einem Funkadapter (2);
- Übertragen der Funkdaten von dem Funkadapter (2) an ein mit dem Funkadapter (2) zum Datenaustausch verbundenes Mobilgerät (1);
- Erstellen von mindestens einem, mehreren oder allen Knoten (10) zugeordneten Zustandsdaten mit dem Mobilgerät (1) basierend auf den Funkdaten, wobei die Zustandsdaten den Zustand einer Funkverbindung eines entsprechenden Knotens (10) repräsentieren, bevorzugt eine Empfangsfeldstärke des Funk-Adapters (2) und/oder eine Sendefeldstärke des Knotens (10);
- Erstellen einer Konfiguration des drahtlosen Netzwerks (101) basierend auf den Zustandstaten, wobei die Konfiguration bevorzugt von dem Mobilgerät (1) erstellt wird,
**dadurch gekennzeichnet, dass** bei dem Erstellen der Konfiguration Konfigurationsdaten mindestens eines, mehrerer oder aller Knoten (10) erstellt werden, wobei die Konfigurationsdaten an die entsprechenden Knoten (10) übertragen werden, so dass das Netzwerk (101) konfiguriert wird, und/oder wobei die Konfigurationsdaten an ein Inbetriebnahme-Werkzeug übertragen werden.

2. Verfahren nach Anspruch 1, bei dem das Verfahren beim Aussenden der Funkdaten das drahtlose Netzwerk (101) eine erste Konfiguration aufweist, und beim Erstellen der Konfiguration eine von der ersten Konfiguration verschiedene zweite Konfiguration erstellt wird.

3. Verfahren nach Anspruch 2, bei dem das Verfahren mindestens einmal wiederholt wird, wobei beim Wiederholen des Verfahrens beim Aussenden der Funkdaten das drahtlose Netzwerk (101) die zweite Konfiguration aufweist, und beim Erstellen der Konfiguration eine von der zweiten Konfiguration verschiedene dritte Konfiguration, bevorzugt eine von der ersten und der zweiten Konfiguration verschiedene dritte Konfiguration, erstellt wird.

4. Verfahren nach einem der vorangegangenen Ansprüche, bei dem beim Erstellen der Konfiguration und/oder der Konfigurationsdaten mindestens einer der Knoten (10) als Repeater (11) konfiguriert wird, und/oder bei dem beim Erstellen der Konfiguration eine Kommunikationsverbindung, bevorzugt eine Netzwerkverbindung (7), mindestens eines Knotens (10) verändert wird.

5. Verfahren nach einem der vorangegangenen Ansprüche, bei dem die Funkdaten und/oder die Zustandsdaten in einem Speicher des Mobilgeräts (1) hinterlegt werden.

6. Verfahren nach einem der vorangegangenen Ansprüche, bei dem die Zustandsdaten mindestens eines der Knoten (10), und/oder eine basierend auf den Zustandsdaten erstellte Analyse, auf dem Mobilgerät (1) angezeigt werden, wobei bevorzugt die Analyse von dem Mobilgerät (1) erstellt wird.

7. Verfahren nach einem der vorangegangenen Ansprüche, bei dem bei oder nach dem Übertragen der Funkdaten an das Mobilgerät (1), und/oder bei oder nach dem Erstellen der Zustandsdaten, eine Position (12) des Mobilgeräts (1) mit den Zustandsdaten verknüpft wird.

8. Verfahren nach einem der vorangegangenen Ansprüche, bei dem Zustandsdaten eines, mehrerer oder aller Knoten (10) an mindestens zwei verschiedenen Positionen (12) des Mobilgeräts (1) erstellt werden, wobei bevorzugt basierend auf den Zustandsdaten eines, mehrerer oder aller Knoten (10) und/oder den jeweiligen Positionen (12) des Mobilgeräts Funklöcher ermittelt werden, bevorzugt von dem Mobilgerät (1) ermittelt werden.

9. Verfahren nach einem der vorangegangenen Ansprüche, bei dem basierend auf den Zustandsdaten und/oder der Konfiguration mindestens ein Ort (13) bestimmt wird, bevorzugt von dem Mobilgerät (1) bestimmt wird, und ein Knoten (10), bevorzugt ein Repeater (11), an dem entsprechend bestimmten Ort (13) aufgestellt und dem drahtlosen Netzwerk (101) hinzugefügt wird, wobei bevorzugt nach dem Hinzufügen bei einer Wiederholung des Verfahrens der Ort (13) des hinzugefügten Knotens verändert wird, und bevorzugt die Konfiguration und/oder die Zustandsdaten vor der Veränderung des Orts (13) und nach der Veränderung des Orts (13) verglichen werden.

10. System (100) zum Konfigurieren eines drahtlosen Netzwerks (101), umfassend ein drahtloses Netzwerk (101) aufweisend mindestens einen oder mehrere Knoten (10), einen Funkadapter (2) und ein mit dem Funkadapter (2) zum Datenaustausch verbundenes Mobilgerät (1), wobei das System (100) dazu eingerichtet ist, das Verfahren nach einem der vorangegangenen Ansprüche 1 bis 9 durchzuführen, wobei bevorzugt das Mobilgerät (1) dazu eingerichtet ist, eine Konfiguration des drahtlosen Netzwerks (101) zu erstellen.

11. System (100) nach Anspruch 10, wobei der Funkadapter (2) mit dem Mobilgerät (1) drahtlos verbunden ist, bevorzugt über Bluetooth, oder der Funkadapter (2) in das Mobilgerät (1) integriert ist und/oder das Mobilgerät (1) den Funkadapter (2) aufweist.

12. System (100) nach einem der vorangegangenen Ansprüche 10 oder 11, bei dem mindestens einer der Knoten (10) vor einer Durchführung des Verfahrens nicht als Repeater (11) konfiguriert ist, und nach der Durchführung des Verfahrens als Repeater (11) konfiguriert ist.

13. System (100) nach einem der vorangegangenen Ansprüche 10 bis 12, bei dem die Konfiguration des drahtlosen Netzwerks Konfigurationsdaten mindestens eines, mehrerer oder aller Knoten (10) umfasst, wobei bevorzugt das Mobilgerät (1) dazu eingerichtet ist, die Konfiguration und/oder die Konfigurationsdaten an ein Inbetriebnahme-Werkzeug und/oder einen zu konfigurierenden Knoten (10) zu übertragen, so dass die jeweiligen Knoten (10) durch die Konfigurationsdaten konfiguriert sind.

14. System (100) nach einem der vorangegangenen Ansprüche 10 bis 13, bei dem das Mobilgerät (1) eine Benutzerschnittstelle aufweist und das Mobilgerät (1) dazu eingerichtet ist, Befehle von einem Benutzer zu empfangen und zu verarbeiten.

15. System (100) nach einem der vorangegangenen Ansprüche 10 bis 14, bei dem das Mobilgerät (1) ein Display (3) aufweist und dazu eingerichtet ist, Zustandsdaten und/oder eine basierend auf den Zustandsdaten erstellte Analyse, bevorzugt eine Funklochanalyse, darzustellen.
